(19) Europäisches Patentamt
European Patent Office
Office européen des brevets

(11) **EP 3 924 640 B1**

(12) **EUROPÄISCHE PATENTSCHRIFT**

(45) Veröffentlichungstag und Bekanntmachung des Hinweises auf die Patenterteilung:
**14.01.2026   Patentblatt 2026/03**

(21) Anmeldenummer: **20705157.4**

(22) Anmeldetag: **11.02.2020**

(51) Internationale Patentklassifikation (IPC):
***F16F 15/14*** *(2006.01)*

(52) Gemeinsame Patentklassifikation (CPC):
**F16F 15/145**

(86) Internationale Anmeldenummer:
**PCT/EP2020/053459**

(87) Internationale Veröffentlichungsnummer:
**WO 2020/165163 (20.08.2020 Gazette 2020/34)**

(54) **DREHSCHWINGUNGSDÄMPFUNGSANORDNUNG**

TORSIONAL VIBRATION DAMPING ASSEMBLY

ENSEMBLE D'AMORTISSEMENT DE VIBRATIONS TORSIONNELLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.02.2019   DE 102019201875**

(43) Veröffentlichungstag der Anmeldung:
**22.12.2021   Patentblatt 2021/51**

(73) Patentinhaber: **ZF Friedrichshafen AG**
**88046 Friedrichshafen (DE)**

(72) Erfinder:
• **SIEMENS, Kyrill**
**97084 Würzburg (DE)**
• **BENDER, Jörg**
**97080 Würzburg (DE)**

(56) Entgegenhaltungen:
**EP-A2- 2 282 078     DE-A1- 102011 086 436**

EP 3 924 640 B1

**Beschreibung**

Die vorliegende Erfindung betrifft eine Drehschwingungsdämpfungsanordnung, insbesondere drehzahladaptiver Tilger gemäß dem Oberbegriff des Anspruchs 1, umfassend einen um eine Drehachse drehbaren Auslenkungsmassenträger sowie eine Mehrzahl von in Umfangsrichtung aufeinanderfolgend an dem Auslenkungsmassenträger aus einer Grund-Relativlage bezüglich diesem auslenkbar getragenen Auslenkungsmassen, wobei bei Auslenkung aus der Grund-Relativlage die radiale Lage der Auslenkungsmassen bezüglich der Drehachse sich verändert, wobei die Auslenkungsmassen vermittels Kopplungsformationen am Auslenkungsmassenträger ausgehend von der Grund-Relativlage in beiden Umfangsrichtungen auslenkbar getragen sind, wobei in Zuordnung zu wenigstens einer, vorzugsweise jeder Auslenkungsmasse eine elastisch verformbare Anschlagformation vorgesehen ist zum Beenden der Auslenkungsbewegung der Auslenkungsmasse nach Erreichen einer Anschlag-Auslenkung, wobei die elastisch verformbare Anschlagformation bezüglich des Auslenkungsmassenträgers fest getragenes, elastisches Anschlagmaterial umfasst. Eine derartige Drehschwingungsdämpfungsanordnung ist aus der EP 2 282 078 A2 bekannt. Ferner betrifft die vorliegende Erfindung ein Verfahren zur Herstellung einer derartigen Drehschwingungsdämpfungsanordnung.

Bei derartigen Drehschwingungsdämpfungsanordnungen werden die Auslenkungsmassen durch die im Rotationsbetrieb auftretenden Fliehkräfte bezüglich der Drehachse nach radial außen und dadurch in ihre Grund-Relativlage bezüglich des Auslenkungsmassenträgers beaufschlagt. Bei Auftreten von insbesondere periodischen Drehungleichförmigkeit können die Auslenkungsmassen sich im Fliehpotenzial ausgehend aus der Grund-Relativlage nach radial innen bewegen, wobei sie potentielle Energie aufnehmen. Es kann dadurch eine der anregenden Schwingung entgegenwirkende Schwingung der Auslenkungsmaßen aufgebaut werden.

Die Auslegung der Auslenkungsmassen bzw. des diese tragenden Auslenkungsmassenträgers ist derart, dass im normalen Rotationsbetrieb, also bei eine Schwingung bezüglich des Auslenkungsmassenträgers ausführenden Auslenkungsmassen, ein gegenseitiger Kontakt der Auslenkungsmassen mit der diesen zugeordneten und am Auslenkungsmassenträger vorgesehenen, elastisch verformbaren Anschlagformation nicht auftritt. Die elastisch verformbare Anschlagformation wird jedoch doch dann wirksam, wenn beispielsweise beim Abstellen einer Brennkraftmaschine und abnehmender Drehzahl auch die auf die Auslenkungsmassen einwirkende und diese nach radial außen belastende Fliehkraft abnimmt. Auch dann, wenn beim Anlassen einer Brennkraftmaschine unter der Wirkung eines Anlassers oder Anlasser/Generators eine auch auf den Auslenkungsmassenträger einwirkende sehr starke Drehbeschleunigung auftritt, welcher mit einsetzender Zündung von der Brennkraftmaschine abgegebene Drehmomentenstöße überlagert sein können, kann die elastisch verformbaren Anschlagformation wirksam werden, um harte Anschläge und damit auch Beschädigungen im Bereich der Auslenkungsmassen oder am Auslenkungsmassenträger sowie auch Anschlaggeräusche zu vermeiden.

Es ist die Aufgabe der vorliegenden Erfindung, eine Drehschwingungsdämpfungsanordnung und ein Verfahren zur Herstellung einer Drehschwingungsdämpfungsanordnung vorzusehen, bei welcher bei kompakter und zuverlässig wirkender Bauart eine auch bei den im Drehbetrieb maximal zu erwartenden Drehbeschleunigungen die Wirksamkeit einer mit elastisch verformbarem Material aufgebauten Anschlagformation im Bereich der elastischen Verformbarkeit derselben gewährleistet ist.

Erfindungsgemäß wird diese Aufgabe gelöst durch eine Drehschwingungsdämpfungsanordnung, insbesondere drehzahladaptiver Tilger gemäß Anspruch 1. Die Drehschwingungsdämpfungsanordnung umfasst einen um eine Drehachse drehbaren Auslenkungsmassenträger sowie eine Mehrzahl von in Umfangsrichtung aufeinanderfolgend an dem Auslenkungsmassenträger aus einer Grund-Relativlage bezüglich diesem auslenkbar getragenen Auslenkungsmassen, wobei bei Auslenkung aus der Grund-Relativlage die radiale Lage der Auslenkungsmassen bezüglich der Drehachse sich verändert, wobei die Auslenkungsmassen vermittels Kopplungsformationen am Auslenkungsmassenträger ausgehend von der Grund-Relativlage in beiden Umfangsrichtungen auslenkbar getragen sind, wobei in Zuordnung zu wenigstens einer, vorzugsweise jeder Auslenkungsmasse eine elastisch verformbare Anschlagformation vorgesehen ist zum Beenden der Auslenkungsbewegung der Auslenkungsmasse nach Erreichen einer Anschlag-Auslenkung, wobei die elastisch verformbare Anschlagformation bezüglich des Auslenkungsmassenträgers fest getragenes, elastisches Anschlagmaterial umfasst, wobei in Zuordnung zu wenigstens einer, vorzugsweise jeder Auslenkungsmasse gilt:

$$R = V_E/E$$

wobei $V_E$ ein in Zuordnung zu einer Auslenkungsmasse bei Erreichen der Anschlag-Auslenkung durch Verformung des elastischen Anschlagmaterials wirksames Anschlagmaterialvolumen ist und E eine im Zusammenhang mit der kinetischen Energie einer Auslenkungsmasse bei Erreichen der Anschlag-Auslenkung stehende Einschlaggröße ist, und wobei für das Verhältnis R gilt:

$$0{,}15 \times 10^{-3}\ m^2/kg \le R \le 0{,}6 \times 10^{-3}\ m^2/kg.$$

Mit derartiger Auslegung eines Verhältnisses zwischen der die kinetische Energie beim Erreichen der Anschlag-Auslenkung repräsentierenden bzw. damit in Zusammenhang stehenden Einschlaggröße und dem beim Auftreten eines Kontakts zwischen einer Auslenkungsmasse und dem Anschlagmaterial zur Verfügung stehenden bzw. zu verformenden Volumen des Anschlagmaterial wird gewährleistet, dass auch bei ungünstigen kinetischen Bedingungen, also bei Auftreffen einer Auslenkungsmasse mit sehr hoher bzw. maximal zu erwartender Geschwindigkeit ein ausreichendes Volumen des Anschlagmaterials zur Verfügung gestellt ist, um durch Verformung desselben die Bewegung der Auslenkungsmasse ohne harten Anschlag abzufangen.

Für die Einschlaggröße E gilt:

$$E = M_{eff} \times 2 \times A_A$$

wobei $M_{eff}$ eine effektive Masse einer Auslenkungsmasse ist und $A_A$ die Anschlag-Auslenkung einer Auslenkungsmasse bei Auftreten eines Kontakts zwischen der Auslenkungsmasse und dem Anschlagmaterial bezüglich der Grund-Relativlage der Auslenkungsmasse ist. Die Einschlaggröße ist also eine aus dem Impuls einer Auslenkungsmasse abgeleitete Größe, welche einerseits die Masse bzw. die effektive Masse der Auslenkungsmasse und andererseits den bei einer Auslenkungsbewegung der Auslenkungsmasse maximal zurücklegbaren Weg berücksichtigt, über welchen hinweg die Auslenkungsmasse aufgrund der insbesondere auf den Auslenkungsmasseträger einwirkenden Drehbeschleunigung bezüglich des Auslenkungsmassenträgers beschleunigt werden kann.

Gemäß einem weiteren Aspekt wird die eingangs genannte Aufgabe gelöst durch ein Verfahren zur Herstellung einer derartigen Drehschwingungsdämpfungsanordnung gemäß dem Oberbegriff des Anspruchs 1, bei welchem Verfahren die Drehschwingungsdämpfungsanordnung derart ausgelegt wird, dass bei wenigstens einer, vorzugsweise jeder Auslenkungsmasse für das Verhältnis R gilt:

$$0{,}15 \times 10^{-3}\ m^2/kg \le R \le 0{,}6 \times 10^{-3}\ m^2/kg.$$

Wenn die Auslenkungsmasse sich in Luft bewegt, kann die effektive Masse einer Auslenkungsmasse die Masse der Auslenkungsmasse sein.

Bewegt die Auslenkungsmasse sich in einem Medium mit größerer Dichte, also beispielsweise in dem Innenraum eines vollständig mit Öl gefüllten hydrodynamischen Drehmomentwandlers, kann unter Berücksichtigung der Dichte des die Auslenkungsmasse umgebenden Mediums für die effektive Masse einer Auslenkungsmasse gelten:

$$M_{eff} = (\rho_A - \rho_U) \times V_A$$

wobei $\rho_A$ die Dichte eines Aufbaumaterials der Auslenkungsmasse ist, $\rho_U$ die Dichte eines die Auslenkungsmasse umgebenden Mediums ist und $V_A$ das Volumen der Auslenkungsmasse ist.

Unter Berücksichtigung der nur als Näherung zu betrachtenden Annahme, dass ein Massenschwerpunkt der Auslenkungsmasse sich auf einer Kreisbahn bewegt, gilt erfindungsgemäß für die Anschlag-Auslenkung:

$$A_A = 2 \times r_B \times \pi \times W_2/360°$$

wobei $r_B$ ein Bahnradius einer Bewegungsbahn des Massenschwerpunkts der Auslenkungsmasse um ein Massenschwerpunkt-Bewegungszentrum ist und $W_2$ ein Auslenkungswinkel des Massenschwerpunkts bei Bewegung der Auslenkungsmasse zwischen der Grund-Relativlage der Auslenkungsmasse bezüglich des Auslenkungsmassenträgers und der bei Auftreten eines Kontakts zwischen der Auslenkungsmasse und dem Anschlagmaterial vorhandenen Relativlage der Auslenkungsmasse bezüglich des Auslenkungsmassenträgers ist.

Bei der erfindungsgemäß aufgebauten Drehschwingungsdämpfungsanordnung kann ferner vorgesehen sein, dass jede Kopplungsformation wenigstens eine Führungsbahn mit radial außen liegendem Führungsbahnscheitel in dem Auslenkungsmassenträger, wenigstens eine Führungsbahn mit radial innen liegendem Führungsbahnscheitel in einer der Auslenkungsmassen sowie ein entlang der wenigstens einen Führungsbahn im Auslenkungsmassenträger und der wenigstens einen Führungsbahn in der Auslenkungsmasse bewegbares, vorzugsweise rollenartiges, Kopplungselement umfasst, wobei bei Positionierung der Auslenkungsmasse in der Grund-Relativlage das Kopplungselement im Führungsbahnscheitel der wenigstens einen Führungsbahn im Auslenkungsmassenträger und im Führungsbahnscheitel der wenigstens einen Führungsbahn in der Auslenkungsmasse positioniert ist.

Ferner wird für eine definierte Bewegung der Auslenkungsmasse vorgeschlagen, dass jede Auslenkungsmasse vermittels der dieser zugeordneten Kopplungsformationen derart mit dem Auslenkungsmassenträger gekoppelt ist, dass bei Auslenkung aus der Grund-Relativlage eine Auslenkungsbewegung der Auslenkungsmasse zusammengesetzt ist aus einer translatorischen Radialbewegung in einer Richtung parallel zu einer Radialrichtung bezüglich der Drehachse und einer translatorischen Tangentialbewegung in einer Richtung orthogonal zu einer Radialrichtung bezüglich der Drehachse.

Das Anschlagmaterial kann bei besonders vorteilhafte Ausgestaltung mit Elastomermaterial, vorzugsweise AEM, FKM, HNBR oder EPDM aufgebaut sein. Derartiges Elastomermaterial kann insbesondere für die Anwendung in einer erfindungsgemäßen Drehschwingungsdämpfungsanordnung eine besonders vorteilhafte Shore A Härte im Bereich von 0,85-0,95, vorzugsweise etwa 0,9, aufweisen.

Die Erfindung betrifft ferner ein Antriebssystem für ein Fahrzeug, umfassend eine Brennkraftmaschine und einen mit der Brennkraftmaschine in Antriebswechselwirkung stehenden Antriebsstrang mit wenigstens einer erfindungsgemäß aufgebauten Drehschwingungsdämpfungsanordnung.

Die vorliegende Erfindung wird nachfolgend mit Bezug auf die beiliegenden Figuren detailliert beschrieben. Es zeigt:

Fig. 1 eine Axialansicht einer Drehschwingungsdämpfungsanordnung bei in einer Grund-Relativlage positionierter Auslenkungsmasse;

Fig. 2 eine der Fig. 1 entsprechende Ansicht mit ausgelenkter Auslenkungsmasse;

Fig. 3 eine Teil-Längsschnittansicht der die Schwingungsdämpfungsanordnung mit ausgelenkter Auslenkungsmasse;

Fig. 4 ein Antriebssystem mit einer in ein Getriebe integrierten Drehschwingungsdämpfungsanordnung.

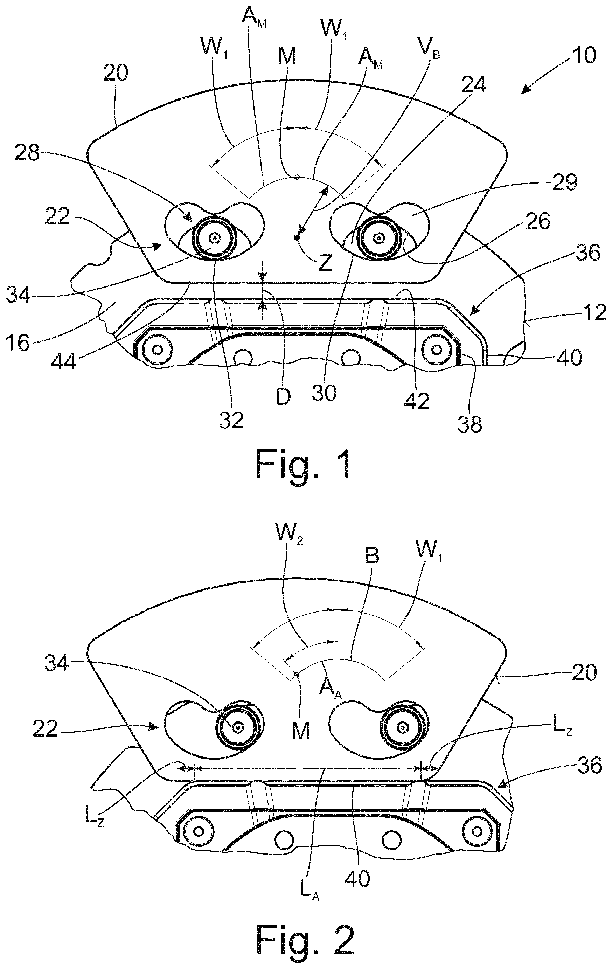

In den Fig. 1, 2 und 3 ist eine als drehzahladaptiver Tilger bezeichnete bzw. wirksame Drehschwingungsdämpfungsanordnung allgemein mit 10 bezeichnet. Die Drehschwingungsdämpfungsanordnung 10 umfasst einen Auslenkungsmassenträger 12 mit zwei in Richtung einer Drehachse A aufeinander folgend angeordneten Trägerscheiben 14, 16. Die Trägerscheiben 14, 16 sind durch eine Mehrzahl von Nietbolzen 18 in axialem Abstand zueinander miteinander fest verbunden.

Die Drehschwingungsdämpfungsanordnung 10 umfasst beispielsweise vier in Umfangsrichtung aufeinander folgend angeordnete Auslenkungsmassen 20, von welchen in Fig. 1 eine dargestellt ist. In Fig. 1 ist die in dieser Darstellung vor der Auslenkungsmasse 20 liegende Trägerscheibe 14 nicht gezeigt. Jede der Auslenkungsmassen 20 kann eine oder mehrere Scheiben 21, 23 umfassen, die axial aufeinander folgend positioniert und ggf. miteinander fest verbunden sind. Jede Auslenkungsmasse 20 ist durch zwei mit Umfangsabstand zueinander angeordnete und allgemein mit 22 bezeichnete, zueinander grundsätzlich gleich bzw. identisch aufgebaute Kopplungsformationen mit dem Auslenkungsmassenträger 12 gekoppelt. Jede der Kopplungsformationen 22 umfasst an einer in den Trägerscheiben 14 bzw. 16 des Auslenkungsmassenträgers 12 jeweils ausgebildeten Öffnung 24 eine Führungsbahn 26 mit radial außen liegendem Führungsbahnscheitel 28. In Zuordnung zu jedem derartigen Paar von Führungsbahnen im Auslenkungsmassenträger 12 umfasst jede Kopplungsformation 22 in jeder der Auslenkungsmassen 20 eine in einer darin vorgesehenen Öffnung 29 ausgebildete Führungsbahn 30 mit radial innen liegendem Führungsbahnscheitel 32. Ferner umfasst jede Kopplungsformation 22 ein rollen- bzw. walzenartig ausgebildetes Kopplungselement 34, das die in den Trägerscheiben 14, 16 gebildeten Öffnungen 24 einerseits und die zugehörige in einer jeweiligen Auslenkungsmasse 20 ausgebildete Öffnung 29 andererseits durchsetzt und somit mit jeder der Führungsbahnen 26, 30 zusammenwirkt.

Durch die in Zuordnung zu jeder Auslenkungsmasse 20 paarweise vorgesehenen Kopplungsformationen 22 ist eine Relativbewegung der Auslenkungsmassen 20 bezüglich des Auslenkungsmassenträgers 12 ermöglicht. Im Rotationsbetrieb, also bei Drehung des Auslenkungsmassenträgers 12 um die Drehachse A, werden grundsätzlich die Auslenkungsmassen 22 aufgrund der auf diese einwirkenden Fliehkraft nach radial außen gezogen. Dies führt dazu, dass die Kopplungselemente 34 durch die radial bezüglich einander beaufschlagten Führungsbahnen 26 einerseits und 30 andererseits in die jeweiligen Führungsbahnscheitel 28, 32 gezwungen werden. Bei der in Fig. 1 dargestellten Grund-Relativpositionierung der Auslenkungsmassen 20 bezüglich des Auslenkungsmassenträgers 12 nehmen bei im Bereich der jeweiligen Führungsbahnscheitel 28, 32 positionierten Kopplungselementen 34 die Auslenkungsmassen 20 ihre maximal nach radial außen verlagerte Positionierung bezüglich des Auslenkungsmassenträgers 12 ein.

Treten im Rotationsbetrieb Drehungleichförmigkeiten auf, führt dies zu einer Umfangsbeschleunigung des Auslenkungsmassenträgers 12. Da die Auslenkungsmassen 20 dieser Umfangsbeschleunigung zunächst nicht folgen können bzw. werden, werden sie in Umfangsrichtung bezüglich des Auslenkungsmassenträgers 12 bewegt. Bei dieser Bewegung rollen die Kopplungselemente 34 entlang der Führungsbahnen 26, 30, was aufgrund der gekrümmten Ausgestaltung der Führungsbahnen 26, 30 dazu führt, dass bei Bewegung ausgehend von der Grund-Relativlage die Auslenkungsmassen 20 sich nicht nur in Umfangsrichtung bezüglich des Auslenkungsmassenträgers 12 bewegen, sondern auch nach radial innen gezwungen werden. Dabei nehmen die Auslenkungsmassen 20 potentielle Energie auf und werden somit zu einer Schwingung angeregt, welche der auf den Auslenkungsmassenträger 12 einwirkenden Beschleunigung bzw. Schwingung entgegenwirkt.

Bei der in Fig. 1 dargestellten Ausgestaltung der Kopplungsformationen 22 führen die Auslenkungsmassen 20 eine derartige Bewegung bezüglich des Auslenkungsmassenträgers 12 durch, dass ein Massenschwerpunkt M der Auslenkungsmassen 20 einerseits eine translatorische Bewegung nach radial innen bzw. parallel zu einer Radiallinie durchführt und andererseits eine orthogonal zu einer derartigen Radiallinie, also tangential orientierte Translationsbewegung ausführt. Eine Verschwenkung der Auslenkungsmassen 20 z. B. um eine den Massenschwerpunkt M durchsetzende und zur Drehachse A parallele Schwenkachse erfolgt im Wesentlichen nicht.

Am Auslenkungsmassenträger 12 ist eine allgemein mit 36 bezeichnete Anschlagformation vorgesehen. Diese Anschlagformation 36 umfasst einen starr, beispielsweise aus Metallmaterial aufgebauten Anschlagträger 38 und beispielsweise an dessen Außenumfangsbereich angeformtes oder/und durch Formschluss daran gehaltenes, elastisches Anschlagmaterial 40. Beispielsweise kann der Anschlagträger 38 mit Sinterstahlmaterial aufgebaut sein, und das Anschlagmaterial 40 kann mit Elastomermaterial, wie z. B. AEM, FKM, HNBR oder EPDM vorzugsweise mit einer Härte von etwa 90 Shore A aufgebaut sein. Die Anschlagformation 40 stellt in Zuordnung zu jeder Auslenkungsmasse 20 einen Anschlagbereich 42 bereit, an welchem, wie nachfolgend detailliert beschrieben, bei Auslenkung aus der Grund-Relativlage eine jeweilige Auslenkungsmasse 20 in Anlage kommen kann. Man erkennt in Fig. 1, dass bei der dargestellten Ausgestaltungsform die Auslenkungsmassen 20 in ihrem radial inneren und zur Anlage an der Anschlagformation 36 kommenden Bereich 44 mit einer im Wesentlichen geradlinigen und auch im Wesentlichen tangential sich erstreckenden Kontur ausgebildet sind, an welche angepasst auch die Anschlagbereiche 42 der Anschlagformation 36 eine geradlinig sich erstreckende, bezüglich einer Radiallinie tangential, also im Wesentlichen orthogonal dazu angeordnete Kontur aufweisen. Ferner ist in Fig. 1 zu erkennen, dass in der Grund-Relativlage, also bei maximal nach radial außen verlagertem Massenschwerpunkt M, die radial inneren Bereiche 44 der Auslenkungsmassen 20 einen Abstand D zu den jeweils zugeordneten Anschlagbereichen 42 der Anschlagformation 36 aufweisen.

Mit Bezug auf die Fig. 1, 2 und 3 wird nachfolgend die Bewegung einer jeweiligen Auslenkungsmasse 20 bei Auftreten von Drehungleichförmigkeiten, also Umfangsbeschleunigungen, erläutert.

Die Fig. 1 stellt die Auslenkungsmasse 20 in der Grund-Relativlage bezüglich des Auslenkungsmassenträgers 12 dar. Der radial innere Bereich 44 der dargestellten Auslenkungsmasse 20 weist den Abstand D zum Anschlagbereich 42 der Anschlagformation 36 auf. Die im Auslenkungsmassenträger 12 einerseits bzw. der Auslenkungsmasse 20 andererseits vorgesehenen Führungsbahnen, von welchen in Fig. 2 die Führungsbahn 26 der Trägerscheibe 16 sowie die Führungsbahn 30 der Auslenkungsmasse 20 in Zuordnung zur Kopplungsformation 22 zu erkennen ist, sind so gestaltet, dass sie, ausgehend von der Grund-Relativlage, in beiden Umfangsrichtungen eine gleich bemessene Maximal-Auslenkung $A_M$ zulassen. Bei Erreichen der Maximal-Auslenkung $A_M$ würde beispielsweise in der dargestellten Ausgestaltungsform eine Weiterbewegung eines jeweiligen Kopplungselements 34 in den dieses aufnehmenden Öffnungen 24, 29 in den Trägerscheiben 14, 16 bzw. der Auslenkungsmasse 20 nicht möglich sein.

Es ist bei der in Fig. 1 dargestellten Maximal-Auslenkung $A_M$ darauf hinzuweisen, dass diese ausgedrückt ist als ein Auslenkungswinkel $W_1$ von beispielsweise 50° einer bei Auslenkung der Auslenkungsmasse 20 von deren Massenschwerpunkt M durchlaufenen, näherungsweise kreisartigen, also gekrümmten Bewegungsbahn, ausgehend von einer in den Fig. 1 dargestellten Grund-Positionierung des Massenschwerpunkts M bei in der Grund-Relativlage positionierter Auslenkungsmasse 20. Diese Bewegungsbahn des Massenschwerpunkts M kann zumindest in dem der Grund-Positionierung nahen Bereich näherungsweise als Kreisbahn um einen als Massenschwerpunkt-Bewegungszentrum Z zu betrachtenden Mittelpunkt eines eine derartige Kreisbahn beschreibenden Kreises betrachtet werden. Zur Abstimmung einer derartigen Drehschwingungsdämpfungsanordnung 10 auf eine bestimmte anregende Ordnung, beispielsweise der Zündfrequenz einer Brennkraftmaschine, können die Führungsbahnen mit zunehmendem Abstand von den jeweiligen Führungsbahnscheiteln 28, 32 eine von einer Kreisform im Sinne einer Abnahme des Bahn-Krümmungsradius abweichende Kontur aufweisen, so dass eine derartige Gestalt der Führungsbahnen 26, 30 und mithin auch der Bewegungsbahn des Massenschwerpunkts M näherungsweise auch als eine elliptische Bahn betrachtet werden kann, bei welcher ein jeweiliger Scheitel bzw. die Grund-Positionierung im Bereich geringster Krümmung der jeweiligen Bahn angenommen werden kann.

Unter der Annahme einer näherungsweise kreisförmigen Bewegung des Massenschwerpunkt M kann für einen Bahnradius $r_B$ eine Bewegungsbahn B des Massenschwerpunkt zum Radialabstand $r_{SP}$ des Massenschwerpunkts M zur Drehachse A, beispielsweise bei Positionierung einer Auslenkungsmasse 20 in der Grund-Relativlage, näherungsweise folgende Beziehungen gelten:

$$r_B = r_{SP}/(1 + ORD^2),$$

wobei ORD die Schwingungsordnung eines anregenden Systems ist, auf welche eine Abstimmung vorgenommen werden soll.

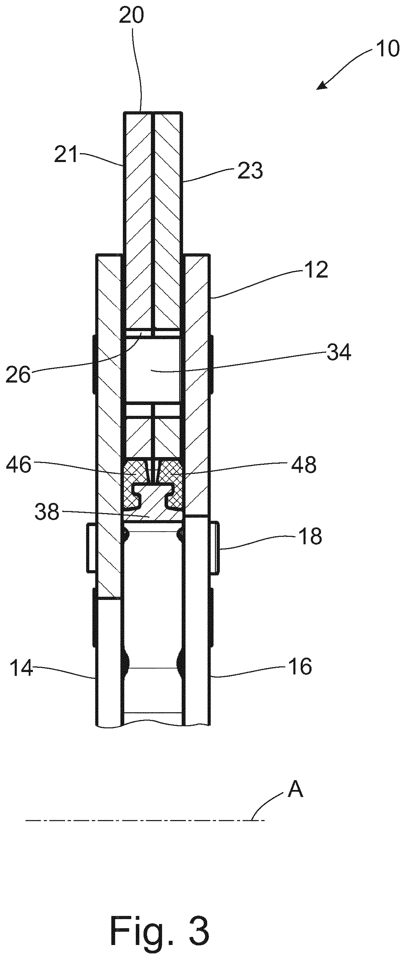

Bei Auslenkung der Auslenkungsmasse 20 und entsprechender Bewegung der Kopplungselemente 34 entlang der Führungsbahnen 26, 30 bewegt sich im Sinne der vorangehend beschriebenen überlagerten translatorischen Bewegungen die Auslenkungsmasse 20 zunehmend nach radial innen und nähert sich somit mit ihrem radial inneren Bereich 44 dem zugeordneten Anschlagbereich 42 an. Bei Erreichen einer einem Auslenkungswinkel $W_2$ von beispielsweise 42° des Massenschwerpunkts M entsprechenden Anschlag-Auslenkung $A_A$ kommt, wie in den Fig. 2 und 3 veranschaulicht, der radial innere Bereich 44 in Anlage an dem Anschlagbereich 42. Da diese beiden Bereiche mit geradlinig sich erstreckender, zueinander parallel verlaufender Kontur ausgebildet sind und da die Auslenkungsmasse 20 ohne Eigenrotation translatorisch verschoben wird, kommen der radial innere Bereich 44 der Auslenkungsmasse 20 und der Anschlagbereich 42 in einem Längenbereich $L_A$ in einen langgestreckten, flächigen Anlagekontakt aneinander, so dass der durch die Auslenkungsmasse 20 auf das elastische Anschlagmaterial 40 ausgeübte Druck im Wesentlichen gleichmäßig verteilt ist. Mit zunehmender Kompression des Anschlagmaterials 40 und damit geringfügig fortgesetzter Verlagerung der Auslenkungsmasse 20 werden auch noch an den Längenbereich $L_A$ anschließende Längenbereiche $L_Z$ des Anschlagmaterial 40 verformt und somit wirksam.

Aufgrund der Ausgestaltung des Anschlagmaterials 40 mit Elastomermaterial und somit mit elastischer Eigenschaft, kann dieses bei Belastung durch die Auslenkungsmasse 20 nach radial innen einfedern und dabei Energie aufnehmen bzw. dissipieren. Die Auslenkungsmasse 20 erfährt somit keinen harten Anschlag, sondern ihre Bewegung wird sanft abgefangen. Dies vermeidet einerseits Beschädigungen, andererseits das Entstehen von Anschlaggeräuschen im Bereich der Drehschwingungsdämpfungsanordnung 10.

Um bei der mit mehreren Scheiben 21, 23 realisierten Ausgestaltung der Auslenkungsmassen 20 eine Beschädigung des Anschlagmaterials 40 im Angrenzungsbereich der Scheiben 21, 23 am radial inneren Bereich 44 insbesondere dann, wenn die Scheiben 21, 23 nicht fest miteinander verbunden sind, zu vermeiden, kann, wie in Figur 3 erkennbar, dass Anschlagmaterial 40 mit zwei Teilen 46, 48 aufgebaut sein, die insbesondere in demjenigen Bereich, in welchem sie in Kontakt mit einer jeweiligen Auslenkungsmasse 20 kommen, einen gegenseitigen Abstand aufweisen, so dass der Angrenzungsbereich der beiden Scheiben 21, 23 das Anschlagmaterial 40 nicht berühren wird und dementsprechend auch keine Beschädigungen am Anschlagmaterial 40 hervorrufen kann. Durch den zwischen den beiden Teilen 46, 48 gebildeten Zwischenraum ist gleichzeitig auch ein Ausweichvolumen bereitgestellt, in welches das im Allgemeinen nicht kompressible, jedoch verformbare Anschlagmaterial 40 ausweichen kann. Sind die beiden Scheiben 21, 23 miteinander fest verbunden oder ist eine Auslenkungsmasse 20 nur aus einer einzigen Scheibe aufgebaut, kann das Anschlagmaterial 40 auch einstückig, also als ein Materialblock aufgebaut sein. Bei derartiger Ausgestaltung kann ein Ausweichvolumen für das Anschlagmaterial 40 beispielsweise in den Trägerschreiben 14, 16 oder am radial inneren Bereich 44 der Auslenkungsmasse 20 bereitgestellt sein.

Bei der Auslegung der Dimensionierung des in Zuordnung zu jeder der Auslenkungsmassen 20 vorgesehenen Anschlagmaterials 40 zum Sicherstellen, dass auch bei den maximal zu erwartenden Relativbeschleunigungen zwischen dem Auslenkungsmassenträger 12 und den Auslenkungsmassen das Anschlagmaterial 40 noch im Bereich seiner elastischen Verformbarkeit wirksam sein kann, ist eine zu berücksichtigende Eingangsgröße der im Moment des Auftreffens einer Auslenkungsmasse auf das zugeordnete Anschlagmaterial 40 vorhandene Impuls der Auslenkungsmasse. Dieser Impuls ist ausgedrückt durch die folgende Beziehung:

$$P = M_{eff} \times \Delta s / \Delta t.$$

Von diesem Impuls wird der Therm

$$M_{eff} \times \Delta s$$

für die vorliegende Erfindung als eine für den Bewegungszustand bzw. die im Moment des Aufschlags vorhandene kinetische Energie einer jeweiligen Anschlagmasse 20 stehende Einschlaggröße E berücksichtigt.

In diesem Therm bzw. in dieser Einschlaggröße repräsentiert $M_{eff}$ die nachfolgend noch diskutierte effektive Masse einer jeweiligen Auslenkungsmasse und die Größe $\Delta s$ wird für den Fall einer maximal möglichen Bewegung der Auslenkungsmasse 20, als das Doppelte der Anschlagauslenkung $A_a$ angenommen. Somit ergibt sich für die Einschlaggröße E folgender Zusammenhang:

$$E = M_{eff} \times 2 \times A_a.$$

Für den Fall, dass eine Auslenkungsmasse 20 sich in einem luftgefüllten Volumen bewegt, kann die effektive Masse $M_{eff}$ gleichgesetzt werden mit der Masse der Auslenkungsmasse 20. Bewegt die Auslenkungsmasse sich beispielsweise in einem mit Öl gefüllten Volumen, beispielsweise in einem hydrodynamischen Drehmomentwandler, kann die effektive Masse der Auslenkungsmasse 20 ermittelt werden als:

$$M_{eff} = (\rho_A - \rho_U) \times V_A$$

Dabei ist $\rho_A$ die Dichte des Aufbaumaterials der Auslenkungsmasse 20, also beispielsweise die Dichte von Stahlmaterial, und $\rho_U$ ist die Dichte des die Auslenkungsmasse 20 umgebende Mediums, also beispielsweise die Dichte von Öl. $V_A$ ist das Volumen einer jeweiligen Auslenkungsmasse 20.

Für den Fall, dass die Bewegungsbahn B des Massenschwerpunkts M näherungsweise einer Kreisbahn entspricht, kann die Anschlagauslenkung $A_a$ ermittelt werden auf der Grundlage folgenden Zusammenhangs:

$$A_A = 2 \times r_B \times \pi \times W_2/360°.$$

In dieser Beziehung kann der Bahnradius $r_B$ gemäß der vorangehend angegebenen Beziehung zwischen dem Radialabstand $r_{SP}$ des Massenschwerpunkts M zur Drehachse A und der Anregungsordnung ermittelt werden.

Es ergibt sich somit für die Einschlaggröße E Folgendes:

$$E = M_{eff} \times 2 \times 2 \times r_B \times \pi \times W_2/360.$$

Diese Einschlaggröße kann für die Annahme einer näherungsweise kreisförmigen Bewegung des Massenschwerpunks M als eine die zum Zeitpunkt des Auftretens eines Kontakts zwischen einer Anschlagmasse 20 und dem zugeordneten Anschlagmaterial 40 vorhandene kinetische Energie der Anschlagmasse 20 repräsentierende Größe herangezogen werden. Es ist darauf hinzuweisen, dass für den Fall, dass die Bewegungsbahn B tatsächlich von einer exakten Kreisbahn abweicht, in dem vorangehend angegebenen Zusammenhang für die Anschlagauslenkung $A_A$ selbstverständlich ein den exakten Bahnverlauf berücksichtigender Wert für die Anschlagauslenkung $A_A$ eingesetzt werden kann.

Das für die Anschlagdämpfung wirksame Volumen des Anschlagmaterials 20 kann beispielsweise ermittelt werden durch das Produkt der Länge des Längenbereichs $L_A$ mit der Querschnittsfläche des Anschlagmaterials, wobei beispielsweise angenommen werden kann, dass in dem Längenbereich $L_A$ das Anschlagmaterial eine näherungsweise konstante Querschnittsfläche haben kann. Alternativ können zusätzlich noch die durch die angrenzenden Längenbereiche $L_Z$ und die entsprechenden Querschnittsflächen des Anschlagmaterials 40 bereitgestellten Volumina berücksichtigt werden, wobei dann, wenn diese Volumina nicht mitberücksichtigt werden, eine erhöhte Auslegungssicherheit erreicht wird.

Gemäß den Prinzipien der Erfindung wird dieses beim Anschlagen einer Auslenkungsmasse 20 durch elastische Verformung wirksame Volumen $V_E$ wirksame Volumen des Anschlagmaterials ins Verhältnis gesetzt zu der Einschlaggröße E, so dass sich folgende Beziehung ergibt:

$$R = V_E/E.$$

Es wurde festgestellt, dass dann, wenn für dieses Verhältnis R gilt:

$$0{,}15 \times 10^{-3} \ m^2/kg \leq R \leq 0{,}6 \times 10^{-3} \ m^2/kg,$$

ein ausreichendes Volumen des Anschlagmaterials 40 in Zourdnung zu einer jeweili- gen Auslenkungmasse 20 vorgesehen ist, welches gewährleistet, dass die beim Anschlagen der Auslenkungsmasse 20 am Anschlagmaterial 40 maximal zu erwar- tende kinetische Energie des Anschlagmaterial durch Verformung des Anschlagme- terials 40 in dem durch die Auslenkungsmasse 20 dann beaufschlagten Bereich voll- ständig aufgenommen werden kann.

Dies bedeutet also, dass das Anschlagmaterial 40 in Zuordnung zu einer jeweiligen Auslenkungsmasse 20 mit derartigem beispielsweise gleichmäßig über den Längenbereich $L_A$, ggf. zusätzlich auch die Längenbereiche $L_Z$, verteiltem Volumen bereitzustellen ist, so dass unter Berücksichtigung der in der Einschlaggröße E reflektierten Aufbauparameter das Verhältnis R im angegebenen Wertebereich liegt. Die in der Einschlaggröße E reflektierten Parameter, wie z. B. die effektive Masse einer jeweiligen Auslenkungsmasse bzw. die Länge der Bewegungsbahn zwischen der Grund- Relativlage einer jeweiligen Auslenkungsmasse und der Anschlag-Auslenkung sind bekannt bzw. können bei der Auslegung einer Drehschwingungsdämpfungsanordnung ermittelt werden und dann zur Ermittlung der Einschlaggröße E verwendet werden.

Nachfolgend wird ein Berechnungsbeispiel für eine derartige Auslegung angeführt. Es sei beispielsweise angenommen, dass die Masse einer Auslenkungsmasse bei 0,288 kg liegt. Der Abstand des Massenschwerpunkts M zur Drehachse A liegt bei 0,1063 m. Die Querschnittsfläche des Anschlagmaterials 40 liegt bei 22,4 x $10^{-6}$ $m^2$ und die Länge des Längenbereichs $L_A$ liegt bei 75 x $10^{-3}$ m. Es ergibt sich somit ein Volumen $V_E$ des Anschlagmaterials 40 von 1,7 x $10^{-6}$ $m^3$. Für die Einschlaggröße E ergibt sich insbesondere dann, wenn die zweite Schwingungsordnung einer anregenden Schwingung zu dämpfen ist, ein Wert von 8,977 x $10^{-3}$ kgm unter der Annahme, dass eine Auslenkungsmasse 40 sich in Luft bewegt. Dies berücksichtigend ergibt sich für das Verhältnis R ein Wert von 0,189 x $10^{-3}$ $m^2$/kg. Werden auch die Längenbereiche $L_Z$ bei der Ermittlung des Volumens $V_E$ mitberücksichtigt, ergibt dies einen Wert $V_E$ = 1,91 x $10^{-6}$ $m^3$. Dies führt zu einem Verhältnis R von 0,213 x $10^{-3}$ $m^2$/kg.

Das vorangehend angeführte Beispiel zeigt also, dass bei einer baulichen Auslegung, welche eine ausreichende Anschlagdämpfung für die Auslenkungsmassen gewährleistet, der Wert R in dem vorangehend definierten Wertebereich liegt.

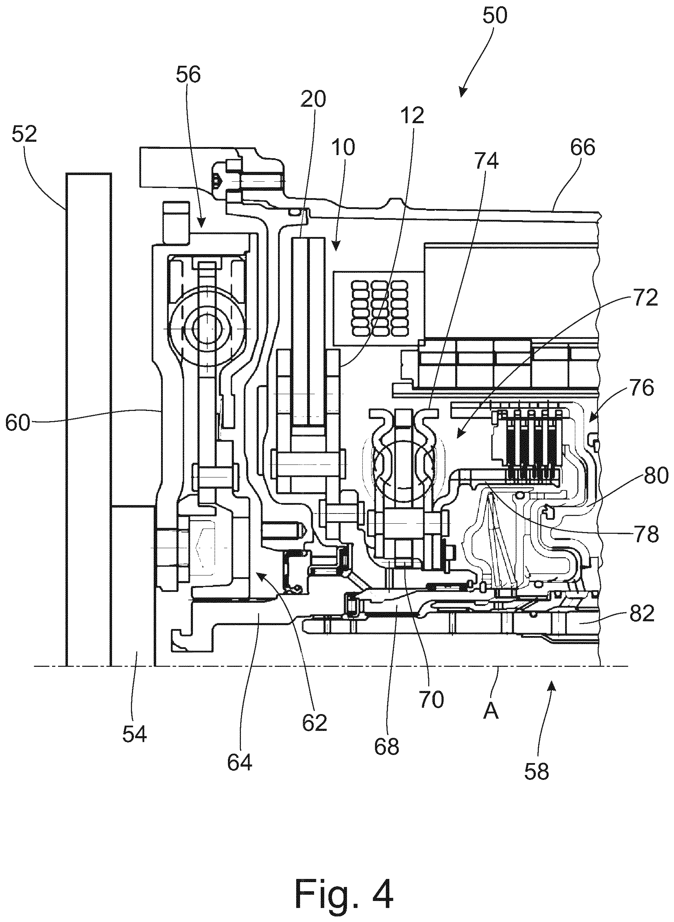

Nachfolgend wird mit Bezug auf die Fig. 4 der Aufbau eines Antriebssystems beschrieben, in welchem eine Drehschwingungsdämpfungsanordnung 10 mit der vorangehend beschriebenen Auslegung eingesetzt werden kann.

Die Fig. 4 zeigt ein Antriebssystem 50 für ein Fahrzeug, bei welchem eine schematisch dargestellte Brennkraftmaschine 52 bzw. deren Kurbelwelle 54 über einen Torsionsschwingungsdämpfer 56, beispielsweise Zweimassenschwungrad, an einen Antriebsstrang 58 angekoppelt ist. Während eine Primärseite 60 des Torsionsschwingungsdämpfers 56 an die Kurbelwelle 54 angebunden ist, ist eine Sekundärseite 62 des Torsionsschwingungsdämpfers 50 über eine aus einem Getriebe 66 herausgreifende Nabe 64 mit dem Auslenkungsmassenträger 12 einer Drehschwingungsdämpfungsanordnung 10 sowie der Primärseite 70 eines weiteren Torsionsschwingungsdämpfers 72 gekoppelt. Eine Sekundärseite 74 des weiteren Torsionsschwingungsdämpfers 72 ist an einen einen Eingangsbereich einer Lamellenkupplung 76 bereitstellenden Innenlamellenträger 78 angebunden. Ein einen Ausgangsbereich der Lamellenkupplung 76 bereitstellender Außenlamellenträger 80 ist über eine weitere Nabe 68 an eine Getriebeeingangswelle 82 des Getriebes 66 angebunden.

Die über den Auslenkungsmassenträger 12 an die Nabe 64 angekoppelte Drehschwingungsdämpfungsanordnung 10 weist den vorangehend beschriebenen Aufbau auf und kann somit effizient zur Dämpfung von in der Brennkraftmaschine 12 angeregten Drehschwingungen beitragen, wobei eine Auslegung auf eine bestimmte Ordnung dieser anregenden Schwingungen vorgesehen sein kann. Dabei kann der Innenraum des Getriebes 66 zumindest teilweise mit Öl gefüllt sein, so dass, wie vorangehend erläutert, zumindest einige der Auslenkungsmassen sich in dem Öl als die Auslenkungsmassen 20 umgebendes Medium bewegen und somit die effektive Dichte der Auslenkungsmassen 20 gemindert ist.

Bezugszeichen

| | |
|---|---|
| 10 | Drehschwingungsdämpfungsanordnung |
| 12 | Auslenkungsmassenträger |
| 14 | Trägerscheibe |
| 16 | Trägerscheibe |
| 18 | Nietbolzen |
| 20 | Auslenkungsmasse |
| 21 | Scheibe |
| 22 | Kopplungsformation |
| 23 | Scheibe |
| 24 | Öffnung |
| 26 | Führungsbahn |
| 28 | Führungsbahnscheitel |
| 29 | Öffnung |
| 30 | Führungsbahn |
| 32 | Führungsbahnscheitel |
| 34 | Kopplungselement |
| 36 | Anschlagformation |
| 38 | Anschlagträger |
| 40 | Anschlagmaterial |
| 42 | Anschlagbereich |
| 44 | radial innerer Bereich |
| 46 | Teil des Anschlagmaterials |
| 48 | Teil des Anschlagmaterials |

| 50 | Antriebssystem |
| 52 | Brennkraftmaschine |
| 54 | Kurbelwelle |
| 56 | Torsionsschwingungsdämpfer |
| 58 | Antriebsstrang |
| 60 | Primärseite |
| 62 | Sekundärseite |
| 64 | Nabe |
| 66 | Getriebe |
| 68 | Nabe |
| 70 | Primärseite |
| 72 | Torsionsschwingungsdämpfer |
| 74 | Sekundärseite |
| 76 | Lamellenkupplung |
| 78 | Innenlamellenträger |
| 80 | Außenlamellenträger |
| 82 | Getriebeeingangswelle |
| A | Drehachse |
| D | Abstand |
| M | Massenschwerpunkt |
| Z | Massenschwerpunkt-Bewegungszentrum |
| B | Bewegungsbahn |
| $r_B$ | Bahnradius |
| $L_A$ | Längenbereich |
| $L_Z$ | Längenbereich |
| $A_A$ | Anschlag-Auslenkung |
| $A_M$ | Maximal-Auslenkung |
| $W_1$ | Winkel |
| $W_2$ | Winkel |

**Patentansprüche**

1. Drehschwingungsdämpfungsanordnung, insbesondere drehzahladaptiver Tilger, umfassend einen um eine Drehachse (A) drehbaren Auslenkungsmassenträger (12) sowie eine Mehrzahl von in Umfangsrichtung aufeinanderfolgend an dem Auslenkungsmassenträger (12) aus einer Grund-Relativlage bezüglich diesem auslenkbar getragenen Auslenkungsmassen (20), wobei bei Auslenkung aus der Grund-Relativlage die radiale Lage der Auslenkungsmassen (20) bezüglich der Drehachse (A) sich verändert, wobei die Auslenkungsmassen (20) vermittels Kopplungsformationen (22) am Auslenkungsmassenträger (12) ausgehend von der Grund-Relativlage in beiden Umfangsrichtungen auslenkbar getragen sind, wobei in Zuordnung zu wenigstens einer, vorzugsweise jeder Auslenkungsmasse (20) eine elastisch verformbare Anschlagformation (36) vorgesehen ist zum Beenden der Auslenkungsbewegung der Auslenkungsmasse (20) nach Erreichen einer Anschlag-Auslenkung $A_A$, wobei die elastisch verformbare Anschlagformation (36) bezüglich des Auslenkungsmassenträgers (12) fest getragenes, elastisches Anschlagmaterial (40) umfasst,

   wobei in Zuordnung zu jeder Auslenkungsmasse (20) ein Verhältnis R gilt:

   $$R = V_E/E$$

   wobei $V_E$ ein in Zuordnung zu einer Auslenkungsmasse (20) bei Erreichen der Anschlag-Auslenkung $A_A$ durch Verformung des elastischen Anschlagmaterials (40) wirksames Anschlagmaterialvolumen ist und E eine im Zusammenhang mit der kinetischen Energie einer Auslenkungsmasse (20) bei Erreichen der Anschlag-Auslenkung $A_A$ stehende Einschlaggröße ist,
   wobei für die Einschlaggröße E gilt:

   $$E = M_{eff} \times 2 \times A_A$$

   wobei $M_{eff}$ eine effektive Masse einer Auslenkungsmasse (20) ist, wobei für den Fall, dass sich eine Auslenkungsmasse (20) in einem Medium bewegt, definiert sich die effektive Masse als: Meff =(pa-pu)x VA , wobei pa die Dichte eines Aufbaumaterials der Auslenkungsmasse (20) ist, pu die Dichte eines die Auslenkungsmasse (20) umgebenden Mediums ist und VA das Volumen der Auslenkungsmasse (20) ist, oder für den Fall, dass die Auslenkungsmasse (20) sich in einem luftgefüllten Volumen bewegt, kann die effektive Masse Meff gleichgesetzt werden mit der Masse der Auslenkungsmasse (20) und $A_A$ die Anschlag-Auslenkung einer Auslenkungsmasse (20) bei Auftreten eines Kontakts zwischen der Auslenkungsmasse (20) und dem Anschlagmaterial (40) bezüglich der Grund-Relativlage der Auslenkungsmasse (20) ist, wobei für die Anschlag-Auslenkung $A_A$ gilt:

$$A_A = 2 \times r_B \times \pi \times W_2/360°$$

wobei $r_B$ ein Bahnradius einer Bewegungsbahn (B) des Massenschwerpunkts (M) der Auslenkungsmasse (20) um ein Massenschwerpunkt-Bewegungszentrum (Z) ist und $W_2$ ein Auslenkungswinkel des Massenschwerpunkts (M) bei Bewegung der Auslenkungsmasse (20) zwischen der Grund-Relativlage der Auslenkungsmasse (20) bezüglich des Auslenkungsmassenträgers (12) und der bei Auftreten eines Kontakts zwischen der Auslenkungsmasse (20) und dem Anschlagmaterial (40) vorhandenen Relativlage der Auslenkungsmasse (20) bezüglich des Auslenkungsmassenträgers (12) ist, **dadurch gekennzeichnet, dass** die Drehschwingungsdämpfungsanordnung (10) derart ausgelegt ist, dass für wenigstens eine, vorzugsweise jede Auslenkungsmasse (20) gilt:

$$0{,}15 \times 10^{-3}\ m^2/kg \le R \le 0{,}6 \times 10^{-3}\ m^2/kg.$$

2. Drehschwingungsdämpfungsanordnung nach einem der vorangehenden Ansprüche, **dadurch gekennzeichnet, dass** bei einer näherungsweise kreisförmigen Bewegung des Massenschwerpunkts (M) für den Bahnradius $r_B$ der Bewegungsbahn (B) des Massenschwerpunkts (M) gilt:

$$r_B = r_{SP}/(1 + ORD^2),$$

wobei ORD die Schwingungsordnung eines anregenden Systems ist, auf welche eine Abstimmung vorgesehen ist, und $r_{SP}$ ein Radialabstand des Massenschwerpunkts (M) zur Drehachse (A) bei Positionierung der Auslenkungsmasse (20) in der Grund-Relativlage ist.

3. Drehschwingungsdämpfungsanordnung nach einem der vorangehenden Ansprüche, **dadurch gekennzeichnet, dass** jede Kopplungsformation (20) wenigstens eine Führungsbahn (26) mit radial außen liegendem Führungsbahnscheitel (28) in dem Auslenkungsmassenträger (12), wenigstens eine Führungsbahn (30) mit radial innen liegendem Führungsbahnscheitel (32) in einer der Auslenkungsmassen (20) sowie ein entlang der wenigstens einen Führungsbahn (26) im Auslenkungsmassenträger (20) und der wenigstens einen Führungsbahn (30) in der Auslenkungsmasse (20) bewegbares, vorzugsweise rollenartiges, Kopplungselement (34) umfasst, wobei bei Positionierung der Auslenkungsmasse (20) in der Grund-Relativlage das Kopplungselement (34) im Führungsbahnscheitel (28) der wenigstens einen Führungsbahn (26) im Auslenkungsmassenträger (12) und im Führungsbahnscheitel (32) der wenigstens einen Führungsbahn (30) in der Auslenkungsmasse (20) positioniert ist.

4. Drehschwingungsdämpfungsanordnung nach einem der vorangehenden Ansprüche, **dadurch gekennzeichnet, dass** jede Auslenkungsmasse (20) vermittels der dieser zugeordneten Kopplungsformationen (22) derart mit dem Auslenkungsmassenträger (12) gekoppelt ist, dass bei Auslenkung aus der Grund-Relativlage eine Auslenkungsbewegung der Auslenkungsmasse (20) zusammengesetzt ist aus einer translatorischen Radialbewegung in einer Richtung parallel zu einer Radialrichtung bezüglich der Drehachse (A) und einer translatorischen Tangentialbewegung in einer Richtung orthogonal zu einer Radialrichtung bezüglich der Drehachse (A).

5. Drehschwingungsdämpfungsanordnung nach einem der vorangehenden Ansprüche, **dadurch gekennzeichnet, dass** das Anschlagmaterial (40) mit Elastomermaterial, vorzugsweise AEM, FKM, HNBR oder EPDM aufgebaut ist, oder/und dass das Anschlagmaterial (40) eine Shore A Härte im Bereich von 0,85-0,95, vorzugsweise etwa 0,9, aufweist.

6. Antriebssystem für ein Fahrzeug, umfassend eine Brennkraftmaschine (52) und einen mit der Brennkraftmaschine in Antriebswechselwirkung stehenden Antriebsstrang (58) mit wenigstens einer Drehschwingungsdämpfungsanordnung (10) nach einem der vorangehenden Ansprüche.

7. Verfahren zur Herstellung einer Drehschwingungsdämpfungsanordnung (10), insbesondere drehzahladaptiver Tilger, die Drehschwingungsdämpfungsanordnung (10) umfassend einen um eine Drehachse (A) drehbaren Auslenkungsmassenträger (12) sowie eine Mehrzahl von in Umfangsrichtung aufeinanderfolgend an dem Auslenkungsmassenträger (12) aus einer Grund-Relativlage bezüglich diesem auslenkbar getragenen Auslenkungsmassen (20), wobei bei Auslenkung aus der Grund-Relativlage die radiale Lage der Auslenkungsmassen (20) bezüglich der Drehachse (A) sich verändert, wobei die Auslenkungsmassen (20) vermittels Kopplungsformationen (22) am Auslenkungsmassenträger (12) ausgehend von der Grund-Relativlage in beiden Umfangsrichtungen auslenkbar getragen sind, wobei in Zuordnung zu wenigstens einer, vorzugsweise jeder Auslenkungsmasse (20) eine elastisch verformbare Anschlagformation (36) vorgesehen ist zum Beenden der Auslenkungsbewegung der Auslenkungsmasse (20) nach Erreichen einer Anschlag-Auslenkung $A_A$, wobei die elastisch verformbare Anschlagformation (36) bezüglich des Auslenkungsmassenträgers (12) fest getragenes, elastisches Anschlagmaterial (40) umfasst,

wobei bei der Drehschwingungsdämpfungsanordnung (10) in Zuordnung zu jeder Auslenkungsmasse (20) ein Verhältnis R gilt:

$$R = V_E/E$$

wobei $V_E$ ein in Zuordnung zu einer Auslenkungsmasse (20) bei Erreichen der Anschlag-Auslenkung $A_A$ durch Verformung des elastischen Anschlagmaterials (40) wirksames Anschlagmaterialvolumen ist und E eine im Zusammenhang mit der kinetischen Energie einer Auslenkungsmasse (20) bei Erreichen der Anschlag-Auslenkung $A_A$ stehende Einschlaggröße ist, wobei für den Fall, dass sich eine Auslenkungsmasse (20) in einem Medium bewegt, definiert sich die effektive Masse als: Meff =(pa-pu)x VA , wobei pa die Dichte eines Aufbaumaterials der Auslenkungsmasse (20) ist, pu die Dichte eines die Auslenkungsmasse (20) umgebenden Mediums ist und VA das Volumen der Auslenkungsmasse (20) ist, oder für den Fall, dass die Auslenkungsmasse (20) sich in einem luftgefüllten Volumen bewegt, kann die effektive Masse Meff gleichgesetzt werden mit der Masse der Auslenkungsmasse (20)
wobei für die Einschlaggröße E gilt:

$$E = M_{eff} \times 2 \times A_A$$

wobei $M_{eff}$ eine effektive Masse einer Auslenkungsmasse (20) ist, wobei für den Fall, dass eine Auslenkungsmasse (20) sich in einem luftgefüllten Volumen bewegt, kann die effektive Masse Meff gleichgesetzt werden mit der Masse der Auslenkungsmasse (20), oder für den Fall, dass sich die Auslenkungsmasse (20) in einem anderen Medium bewegt, definiert sich die effektive Masse als: Meff =(pa-pu)x VA , wobei pa die Dichte eines Aufbaumaterials der Auslenkungsmasse (20) ist, pu die Dichte eines die Auslenkungsmasse (20) umgebenden Mediums ist und VA das Volumen der Auslenkungsmasse (20) ist und $A_A$ die Anschlag-Auslenkung einer Auslenkungsmasse (20) bei Auftreten eines Kontakts zwischen der Auslenkungsmasse (20) und dem Anschlagmaterial (40) bezüglich der Grund-Relativlage der Auslenkungsmasse (20) ist,
wobei für die Anschlag-Auslenkung $A_A$ gilt:

$$A_A = 2 \times r_B \times \pi \times W_2/360°$$

wobei $r_B$ ein Bahnradius einer Bewegungsbahn (B) des Massenschwerpunkts (M) der Auslenkungsmasse (20) um ein Massenschwerpunkt-Bewegungszentrum (Z) ist und $W_2$ ein Auslenkungswinkel des Massenschwerpunkts (M) bei Bewegung der Auslenkungsmasse (20) zwischen der Grund-Relativlage der Auslenkungsmasse (20) bezüglich des Auslenkungsmassenträgers (12) und der bei Auftreten eines Kontakts zwischen der Auslenkungsmasse (20) und dem Anschlagmaterial (40) vorhandenen Relativlage der Auslenkungsmasse (20) bezüglich des Auslenkungsmassenträgers (12) ist,
**dadurch gekennzeichnet, dass** bei dem Verfahren die Drehschwingungsdämpfungsanordnung (10) derart ausgelegt wird, dass für die wenigstens eine, vorzugsweise jede Auslenkungsmasse (20) gilt:

$$0,15 \times 10^{-3} \ m^2/kg \leq R \leq 0,6 \times 10^{-3} \ m^2/kg.$$

8. Verfahren nach Anspruch 7, **dadurch gekennzeichnet, dass**, sofern sich der Massenschwerpunkt (M) näherungsweise auf einer Kreisbahn bewegt, für den Bahnradius $r_B$ der Bewegungsbahn (B) des Massenschwerpunkts (M) gilt:

$$r_B = r_{SP}/(1 + ORD^2),$$

wobei ORD die Schwingungsordnung eines anregenden Systems ist, auf welche eine Abstimmung vorgesehen ist, und $r_{SP}$ ein Radialabstand des Massenschwerpunkts (M) zur Drehachse (A) bei Positionierung der Auslenkungsmasse (20) in der Grund-Relativlage ist.

9. Verfahren nach einem der Ansprüche 7 oder 8, **dadurch gekennzeichnet, dass** jede Kopplungsformation (20) wenigstens eine Führungsbahn (26) mit radial außen liegendem Führungsbahnscheitel (28) in dem Auslenkungsmassenträger (12), wenigstens eine Führungsbahn (30) mit radial innen liegendem Führungsbahnscheitel (32) in einer der Auslenkungsmassen (20) sowie ein entlang der wenigstens einen Führungsbahn (26) im Auslenkungsmassenträger (20) und der wenigstens einen Führungsbahn (30) in der Auslenkungsmasse (20) bewegbares, vorzugsweise rollenartiges, Kopplungselement (34) umfasst, wobei bei Positionierung der Auslenkungsmasse (20) in der Grund-Relativlage das Kopplungselement (34) im Führungsbahnscheitel (28) der wenigstens einen Führungsbahn (26) im Auslenkungsmassenträger (12) und im Führungsbahnscheitel (32) der wenigstens einen Führungsbahn (30) in der Auslenkungsmasse (20) positioniert ist.

10. Verfahren nach einem der Ansprüche 7-9, **dadurch gekennzeichnet, dass** jede Auslenkungsmasse (20) vermittels der dieser zugeordneten Kopplungsformationen (22) derart mit dem Auslenkungsmassenträger (12) gekoppelt ist, dass bei Auslenkung aus der Grund-Relativlage eine Auslenkungsbewegung der Auslenkungsmasse (20) zusammengesetzt ist aus einer translatorischen Radialbewegung in einer Richtung parallel zu einer Radialrichtung bezüglich der Drehachse (A) und einer translatorischen Tangentialbewegung in einer Richtung orthogonal zu einer Radialrichtung bezüglich der Drehachse (A).

11. Verfahren nach einem der Ansprüche 7-10, **dadurch gekennzeichnet, dass** das Anschlagmaterial (40) mit Elastomermaterial, vorzugsweise AEM, FKM, HNBR oder EPDM aufgebaut ist, oder/und dass das Anschlagmaterial (40) eine Shore A Härte im Bereich von 0,85-0,95, vorzugsweise etwa 0,9, aufweist.

**Claims**

1. Rotary vibration damping assembly, in particular rotational-speed-adaptive absorber, comprising a deflection mass carrier (12), which is rotatable about an axis of rotation (A), and a multiplicity of deflection masses (20) which are mounted, following one another in a circumferential direction, on the deflection mass carrier (12) so as to be deflectable out of a basic relative position with respect thereto, wherein, during deflection out of the basic relative position, the radial position of the deflection masses (20) with respect to the axis of rotation (A) changes, wherein the deflection masses (20) are mounted by means of coupling formations (22) on the deflection mass carrier (12) so as to be deflectable in both circumferential directions proceeding from the basic relative position, wherein, in association with at least one, preferably each, deflection mass (20), there is provided an elastically deformable stop formation (36) for ending the deflection movement of the deflection mass (20) after a stop deflection $A_A$ is reached, wherein the elastically deformable stop formation (36) comprises elastic stop material (40) which is mounted fixedly with respect to the deflection mass carrier (12),

wherein, in association with each deflection mass (20), a ratio R applies:

$$R = V_E/E$$

where $V_E$ is a stop material volume which, in association with a deflection mass (20), is effective when the stop deflection $A_A$ is reached as a result of deformation of the elastic stop material (40), and E is an impact variable related to the kinetic energy of a deflection mass (20) when the stop deflection $A_A$ is reached, wherein the following applies for the impact variable E:

$$E = M_{eff} \times 2 \times A_A$$

where $M_{eff}$ is an effective mass of a deflection mass (20), wherein, for the case in which a deflection mass (20) moves in a medium, the effective mass is defined as follows: $M_{eff} = (\rho a - \rho u) \times VA$, where $\rho a$ is the density of a construction material of the deflection mass (20), $\rho u$ is the density of a medium surrounding the deflection mass (20) and VA is the volume of the deflection mass (20), or, for the case in which the deflection mass (20) moves in an air-filled volume, the effective mass Meff can be equated to the mass of the deflection mass (20), and $A_A$ is the stop deflection of a deflection mass (20), with respect to the basic relative position of the deflection mass (20), in the event of contact between the deflection mass (20) and the stop material (40), wherein the following applies for the stop deflection $A_A$:

$$A_A = 2 \times r_B \times \pi \times W_2/360°$$

where $r_B$ is a path radius of a movement path (B) of the centre of mass (M) of the deflection mass (20) about a centre of mass movement centre (Z), and $W_2$ is a deflection angle of the centre of mass (M) during movement of the deflection mass (20) between the basic relative position of the deflection mass (20) with respect to the deflection mass carrier (12) and the relative position of the deflection mass (20) with respect to the deflection mass carrier (12) that exists in the event of contact between the deflection mass (20) and the stop material (40), **characterized in that** the rotary vibration damping assembly (10) is designed such that, for at least one, preferably each, deflection mass (20), the following applies:

$$0.15 \times 10^{-3} \ m^2/kg \leq R \leq 0.6 \times 10^{-3} \ m^2/kg.$$

2. Rotary vibration damping assembly according to one of the preceding claims, **characterized in that**, for an approximately circular movement of the centre of mass (M), the following applies for the path radius $r_B$ of the movement path (B) of the centre of mass (M):

$$r_B = r_{SP}/(1 + ORD^2),$$

where ORD is the vibration order of a stimulating system to which tuning is intended, and $r_{SP}$ is a radial spacing of the centre of mass (M) to the axis of rotation (A) in the case of the deflection mass (20) being positioned in the basic relative position.

3. Rotary vibration damping assembly according to either of the preceding claims, **characterized in that** each coupling formation (20) comprises at least one guide track (26) with radially externally situated guide track apex (28) in the deflection mass carrier (12), at least one guide track (30) with radially internally situated guide track apex (32) in one of the deflection masses (20), and a preferably roller-like coupling element (34) which is movable along the at least one guide track (26) in the deflection mass carrier (20) and the at least one guide track (30) in the deflection mass (20), wherein, when the deflection mass (20) is positioned in the basic relative position, the coupling element (34) is positioned at the guide track apex (28) of the at least one guide track (26) in the deflection mass carrier (12) and at the guide track apex (32) of the at least one guide track (30) in the deflection mass (20).

4. Rotary vibration damping assembly according to one of the preceding claims, **characterized in that** each deflection mass (20) is coupled by means of the coupling formations (22) associated therewith to the deflection mass carrier (12) such that, during deflection out of the basic relative position, a deflection movement of the deflection mass (20) is made up of a translational radial movement in a direction parallel to a radial direction with respect to the axis of rotation (A) and a translational tangential movement in a direction orthogonal to a radial direction with respect to the axis of rotation (A).

5. Rotary vibration damping assembly according to one of the preceding claims, **characterized in that** the stop material (40) is constructed with elastomer material, preferably AEM, FKM, HNBR or EPDM, and/or **in that** the stop material (40) has a Shore A hardness in the range of 0.85 - 0.95, preferably of approximately 0.9.

6. Drive system for a vehicle, comprising an internal combustion engine (52) and a drivetrain (58) which interacts in terms of drive with the internal combustion engine and which has at least one rotary vibration damping assembly (10) according to one of the preceding claims.

7. Method for producing a rotary vibration damping assembly (10), in particular rotational-speed-adaptive absorber, the rotary vibration damping assembly (10) comprising a deflection mass carrier (12), which is rotatable about an axis of rotation (A), and a multiplicity of deflection masses (20) which are mounted, following one another in a circumferential direction, on the deflection mass carrier (12) so as to be deflectable out of a basic relative position with respect thereto, wherein, during deflection out of the basic relative position, the radial position of the deflection masses (20) with respect to the axis of rotation (A) changes, wherein the deflection masses (20) are mounted by means of coupling formations (22) on the deflection mass carrier (12) so as to be deflectable in both circumferential directions proceeding from the basic relative position, wherein, in association with at least one, preferably each, deflection mass (20), there is provided an elastically deformable stop formation (36) for ending the deflection movement of the deflection mass (20) after a stop deflection $A_A$ is reached, wherein the elastically deformable stop formation (36) comprises elastic stop material (40) which is mounted fixedly with respect to the deflection mass carrier (12),

wherein, with the rotary vibration damping assembly (10), in association with each deflection mass (20), a ratio R applies:

$$R = V_E/E$$

where $V_E$ is a stop material volume which, in association with a deflection mass (20), is effective when the stop deflection $A_A$ is reached as a result of deformation of the elastic stop material (40), and E is an impact variable related to the kinetic energy of a deflection mass (20) when the stop deflection $A_A$ is reached, wherein, for the case in which a deflection mass (20) moves in a medium, the effective mass is defined as follows: Meff =(pa-pu)x VA, where $\rho a$ is the density of a construction material of the deflection mass (20), $\rho u$ is the density of a medium surrounding the deflection mass (20) and VA is the volume of the deflection mass (20), or, for the case in which the deflection mass (20) moves in an air-filled volume, the effective mass Meff can be equated to the mass of the deflection mass (20),
wherein the following applies for the impact variable E:

$$E = M_{eff} \times 2 \times A_A$$

where $M_{eff}$ is an effective mass of a deflection mass (20), wherein, for the case in which a deflection mass (20) moves in an air-filled volume, the effective mass Meff can be equated to the mass of the deflection mass (20), or, for the case in which the deflection mass (20) moves in another medium, the effective mass is defined as follows: Meff =(pa-pu)x VA, where $\rho a$ is the density of a construction material of the deflection mass (20), $\rho u$ is the density of a medium surrounding the deflection mass (20) and VA is the volume of the deflection mass (20), and $A_A$ is the stop deflection of a deflection mass (20), with respect to the basic relative position of the deflection mass (20), in the event of contact between the deflection mass (20) and the stop material (40),
wherein the following applies for the stop deflection $A_A$:

$$A_A = 2 \times r_B \times \pi \times W_2/360°$$

where $r_B$ is a path radius of a movement path (B) of the centre of mass (M) of the deflection mass (20) about a centre of mass movement centre (Z), and $W_2$ is a deflection angle of the centre of mass (M) during movement of the deflection mass (20) between the basic relative position of the deflection mass (20) with respect to the deflection mass carrier (12) and the relative position of the deflection mass (20) with respect to the deflection mass carrier (12) that exists in the event of contact between the deflection mass (20) and the stop material (40), **characterized in that**, in the method, the rotary vibration damping assembly (10) is designed such that, for the at least one, preferably each, deflection mass (20), the following applies:

$$0.15 \times 10^{-3} \text{ m}^2/\text{kg} \leq R \leq 0.6 \times 10^{-3} \text{ m}^2/\text{kg}.$$

8. Method according to Claim 7, **characterized in that**, if the centre of mass (M) moves approximately on a circular path, the following applies for the path radius $r_B$ of the movement path (B) of the centre of mass (M):

$$r_B = r_{SP}/(1 + ORD^2),$$

where ORD is the vibration order of a stimulating system to which tuning is intended, and $r_{SP}$ is a radial spacing of the centre of mass (M) to the axis of rotation (A) in the case of the deflection mass (20) being positioned in the basic relative position.

9. Method according to either of Claims 7 and 8, **characterized in that** each coupling formation (20) comprises at least one guide track (26) with radially externally situated guide track apex (28) in the deflection mass carrier (12), at least one guide track (30) with radially internally situated guide track apex (32) in one of the deflection masses (20), and a preferably roller-like coupling element (34) which is movable along the at least one guide track (26) in the deflection mass carrier (20) and the at least one guide track (30) in the deflection mass (20), wherein, when the deflection mass (20) is positioned in the basic relative position, the coupling element (34) is positioned at the guide track apex (28) of the at least one guide track (26) in the deflection mass carrier (12) and at the guide track apex (32) of the at least one guide track (30) in the deflection mass (20).

10. Method according to one of Claims 7-9, **characterized in that** each deflection mass (20) is coupled by means of the coupling formations (22) associated therewith to the deflection mass carrier (12) such that, during deflection out of the basic relative position, a deflection movement of the deflection mass (20) is made up of a translational radial movement in a direction parallel to a radial direction with respect to the axis of rotation (A) and a translational tangential movement in a direction orthogonal to a radial direction with respect to the axis of rotation (A).

11. Method according to one of Claims 7-10, **characterized in that** the stop material (40) is constructed with elastomer material, preferably AEM, FKM, HNBR or EPDM, and/or **in that** the stop material (40) has a Shore A hardness in the range of 0.85 - 0.95, preferably of approximately 0.9.

**Revendications**

1. Ensemble d'amortissement de vibrations torsionnelles, en particulier amortisseur adaptatif en matière de vitesse de rotation, comprenant un support (12) de masses de déviation pouvant tourner autour d'un axe de rotation (A) ainsi qu'une multitude de masses de déviation (20) supportées sur le support (12) de masses de déviation de manière à pouvoir être déviées hors d'une position relative de base par rapport à celui-ci tout en se suivant les unes les autres dans la direction périphérique, la position radiale des masses de déviation (20) par rapport à l'axe de rotation (A) variant lors de la déviation hors de la position relative de base, les masses de déviation (20) étant supportées de manière à pouvoir être déviées en partant de la position relative de base dans deux directions périphériques par des formations de couplage (22) sur le support (12) de masses de déviation, une formation de butée (36) élastiquement déformable étant prévue en association avec au moins une, de préférence chaque masse de déviation (20) pour mettre fin au déplacement de déviation de la masse de déviation (20) après avoir atteint une déviation de butée $A_A$, la formation de butée (36) élastiquement déformable comprenant un matériau de butée (40) élastique supporté fixement par rapport au support (12) de masses de déviation,

un rapport R s'appliquant en association avec chaque masse de déviation (20) :

$$R = V_E/E$$

$V_E$ désignant un volume de matériau de butée efficace par déformation du matériau de butée (40) élastique en association avec une masse de déviation (20) lorsque la déviation de butée $A_A$ est atteinte et E désignant une grandeur d'impact en lien avec l'énergie cinétique d'une masse de déviation (20) lorsque la déviation de butée ($A_A$) est atteinte,
s'appliquant pour la grandeur d'impact E :

$$E = M_{eff} \times 2 \times A_A$$

$M_{eff}$ désignant une masse effective d'une masse de déviation (20), la masse effective étant définie, si une masse de déviation (20) se déplace dans un milieu, comme étant : Meff =(pa-pu)x VA, pa désignant la densité d'un matériau de construction de la masse de déviation (20), pu désignant le densité d'un milieu entourant la masse de déviation (20) et VA désignant le volume de la masse de déviation (20), ou, si la masse de déviation (20) se déplace dans un volume rempli d'air, la masse effective Meff pouvant être assimilée à la masse de la masse de déviation (20) et $A_A$ désignant la déviation de butée d'une masse de déviation (20) lors de l'apparition d'un contact entre la masse de déviation (20) et le matériau de butée (40) par rapport à la position relative de base de la masse de déviation (20),
s'appliquant pour la déviation de butée $A_A$ :

$$A_A = 2 \times r_B \times \pi \times W_2/360°$$

$r_B$ désignant un rayon de voie d'une voie de déplacement (B) du centre de gravité de masse (M) de la masse de déviation (20) d'un centre de déplacement (Z) de centre de gravité de masse et $W_2$ désignant un angle de déviation du centre de gravité de masse (M) lors du déplacement de la masse de déviation (20) entre la position relative de base de la masse de déviation (20) par rapport au support (12) de masses de déviation et la position relative, présente lors de l'apparition d'un contact entre la masse de déviation (20) et le matériau de butée (40), de la masse de déviation (20) par rapport au support (12) de masses de déviation,

**caractérisé en ce que** l'ensemble d'amortissement de vibrations torsionnelles (10) est conçu de telle manière que s'applique pour au moins une, de préférence chaque masse de déviation (20) :

$$0,15 \times 10^{-3} \text{ m}^2/\text{kg} \leq R \leq 0,6 \times 10^{-3} \text{ m}^2/\text{kg}.$$

2. Ensemble d'amortissement de vibrations torsionnelles selon l'une des revendications précédentes, **caractérisé en ce que** s'applique lors d'un déplacement approximativement circulaire du centre de gravité de masse (M) pour le rayon de voie $r_B$ de la voie de déplacement (B) du centre de gravité de masse (M) :

$$r_B = r_{SP}/(1 + \text{ORD}^2),$$

ORD désignant l'ensemble de vibrations d'un système d'excitation, sur lequel une coordination est prévue, et $r_{SP}$ désignant une distance radiale du centre de gravité de masse (M) par rapport à l'axe de rotation (A) lors du positionnement de la masse de déviation (20) dans la position relative de base.

3. Ensemble d'amortissement de vibrations torsionnelles selon l'une des revendications précédentes, **caractérisé en ce que** chaque formation de couplage (20) comprend au moins une voie de guidage (26) avec des sommets (28) de voie de guidage situés radialement à l'extérieur dans le support (12) de masses de déviation, au moins une voie de guidage (30) avec un sommet (32) de voie de guidage situé radialement à l'intérieur dans une des masses de déviation (20) ainsi qu'un élément de couplage (34), de préférence de type galet, pouvant être déplacé le long de l'au moins une voie de guidage (26) dans le support (20) de masses de déviation et de l'au moins une voie de guidage (30) dans la masse de déviation (20), l'élément de couplage (34) étant positionné dans le sommet (28) de voie de guidage de l'au moins une voie de guidage (26) dans le support (12) de masses de déviation et dans le sommet (32) de voie de guidage de l'au moins une voie de guidage (30) dans la masse de déviation (20) lors du positionnement de la masse de déviation (20) dans la position relative de base.

4. Ensemble d'amortissement de vibrations torsionnelles selon l'une des revendications précédentes, **caractérisé en ce que** chaque masse de déviation (20) est couplée au support (12) de masses de déviation par les formations de couplage (22) qui lui sont associées de telle manière que, lors de la déviation hors de la position relative de base, un déplacement de déviation de la masse de déviation (20) se compose d'un déplacement radial par translation dans une direction parallèlement à une direction radiale par rapport à l'axe de rotation (A) et d'un déplacement tangentiel par translation dans une direction orthogonalement à une direction radiale par rapport à l'axe de rotation (A).

5. Ensemble d'amortissement de vibrations torsionnelles selon l'une des revendications précédentes, **caractérisé en ce que** le matériau de butée (40) est construit à partir de matériau élastomère, de préférence d'AEM, FKM, HNBR ou EPDM, et/ou que le matériau de butée (40) présente une dureté Shore A dans la plage de 0,85-0,95, de préférence d'environ 0,9.

6. Système d'entraînement pour un véhicule, comprenant un moteur à combustion interne (52) et une chaîne cinématique (58) en liaison fonctionnelle d'entraînement avec le moteur à combustion interne avec au moins un ensemble d'amortissement de vibrations torsionnelles (10) selon l'une des revendications précédentes.

7. Procédé de fabrication d'un ensemble d'amortissement de vibrations torsionnelles (10), en particulier d'un amortisseur adaptatif en matière de vitesse de rotation, l'ensemble d'amortissement de vibrations torsionnelles (10) comprenant un support (12) de masses de déviation pouvant tourner autour d'un axe de rotation (A) ainsi qu'une multitude de masses de déviation (20) supportées sur le support (12) de masses de déviation de manière à pouvoir être déviées hors d'une position relative de base par rapport à celui-ci tout en se suivant les unes les autres dans la direction périphérique, la position radiale des masses de déviation (20) par rapport à l'axe de rotation (A) variant lors de la déviation hors de la position relative de base, les masses de déviation (20) étant supportées de manière à pouvoir être déviées en partant de la position relative de base dans deux directions périphériques par des formations de couplage (22) sur le support (12) de masses de déviation, une formation de butée (36) élastiquement déformable étant prévue en association avec au moins une, de préférence chaque masse de déviation (20) pour mettre fin au déplacement de déviation de la masse de déviation (20) après avoir atteint une déviation de butée $A_A$, la formation de butée (36) élastiquement déformable comprenant un matériau de butée (40) élastique supporté fixement par rapport au support (12) de masses de déviation,

un rapport R s'appliquant pour l'ensemble d'amortissement de vibrations torsionnelles (10) en association avec chaque masse de déviation (20) :

$$R = V_E/E$$

$V_E$ désignant un volume de matériau de butée efficace par déformation du matériau de butée (40) élastique en association avec une masse de déviation (20) lorsque la déviation de butée $A_A$ est atteinte et E désignant une grandeur d'impact en lien avec l'énergie cinétique d'une masse de déviation (20) lorsque la déviation de butée $A_A$ est atteinte, la masse effective étant définie, si une masse de déviation (20) se déplace dans un milieu, comme étant : Meff =(pa-pu)x VA, pa désignant la densité d'un matériau de construction de la masse de déviation (20), pu désignant la densité d'un milieu entourant la masse de déviation (20), et VA désignant le volume de la masse de déviation (20), ou, la masse effective Meff pouvant être assimilée à la masse de la masse de déviation (20) si la masse de déviation (20) se déplace dans un volume rempli d'air,
s'appliquant pour la grandeur d'impact E :

$$E = M_{eff} \times 2 \times A_A$$

$M_{eff}$ désignant une masse ettective d'une masse de déviation (20), la masse effective Meff pouvant être assimilée à la masse de la masse de déviation (20) si une masse de déviation (20) se déplace dans un volume rempli d'air, ou la masse effective étant définie, si la masse de déviation (20) se déplace dans un autre milieu, comme étant : Meff =(pa-pu)x VA, pa désignant la densité d'un matériau de construction de la masse de déviation (20), pu désignant la densité d'un milieu entourant la masse de déviation (20) et VA désignant le volume de la masse de déviation (20) et $A_A$ désignant la déviation de butée d'une masse de déviation (20) lors de l'apparition d'un contact entre la masse de déviation (20) et le matériau de butée (40) par rapport à la position relative de base de la masse de déviation (20),
s'appliquant pour la déviation de butée $A_A$ :

$$A_A = 2 \times r_B \times \pi \times W_2/360°$$

$r_B$ désignant un rayon de voie d'une voie de déplacement (B) du centre de gravité de masse (M) de la masse de déviation (20) d'un centre de déplacement (Z) de centre de gravité de masse et $W_2$ désignant un angle de déviation du centre de gravité de masse (M) lors du déplacement de la masse de déviation (20) entre la position relative de base de la masse de déviation (20) par rapport au support (12) de masses de déviation et la position relative, présente lors de l'apparition d'un contact entre la masse de déviation (20) et le matériau de butée (40), de la masse de déviation (20) par rapport au support (12) de masses de déviation,
**caractérisé en ce que**, dans le procédé, l'ensemble d'amortissement de vibrations torsionnelles (10) est conçu de telle manière que s'applique pour au moins une, de préférence chaque masse de déviation (20) :

$$0,15 \times 10^{-3} \ m^2/kg \leq R \leq 0,6 \times 10^{-3} \ m^2/kg.$$

8. Procédé selon la revendication 7, **caractérisé en ce que**, dans la mesure où le centre de gravité de masse (M) se déplace approximativement sur une voie circulaire, s'applique pour le rayon de voie $r_B$ de la voie de déplacement (B) du centre de gravité de masse (M) :

$$r_B = r_{SP}/(1 + ORD^2),$$

ORD désignant l'ensemble de vibrations d'un système d'excitation, sur lequel une coordination est prévue, et $r_{SP}$ désignant une distance radiale du centre de gravité de masse (M) par rapport à l'axe de rotation (A) lors du positionnement de la masse de déviation (20) dans la position relative de base.

9. Procédé selon l'une des revendications 7 ou 8, **caractérisé en ce que** chaque formation de couplage (20) comprend au moins une voie de guidage (26) avec des sommets (28) de voie de guidage situés radialement à l'extérieur dans le support (12) de masses de déviation, au moins une voie de guidage (30) avec un sommet (32) de voie de guidage situé radialement à l'intérieur dans une des masses de déviation (20) ainsi qu'un élément de couplage (34), de préférence de type galet, pouvant être déplacé le long de l'au moins une voie de guidage (26) dans le support (20) de masses de déviation et de l'au moins une voie de guidage (30) dans la masse de déviation (20), l'élément de couplage (34) étant positionné dans le sommet (28) de voie de guidage de l'au moins une voie de guidage (26) dans le support (12) de masses de déviation et dans le sommet (32) de voie de guidage de l'au moins une voie de guidage (30) dans la masse de déviation (20) lors du positionnement de la masse de déviation (20) dans la position relative de base.

10. Procédé selon l'une des revendications 7 - 9, **caractérisé en ce que** chaque masse de déviation (20) est couplée au support (12) de masses de déviation par les formations de couplage (22) qui lui sont associées de telle manière que, lors de la déviation hors de la position relative de base, un déplacement de déviation de la masse de déviation (20) se compose d'un déplacement radial par translation dans une direction parallèlement à une direction radiale par rapport à l'axe de rotation (A) et d'un déplacement tangentiel par translation dans une direction orthogonalement à une direction radiale par rapport à l'axe de rotation (A).

11. Procédé selon l'une des revendications 7-10, **caractérisé en ce que** le matériau de butée (40) est construit à partir de matériau élastomère, de préférence d'AEM, FKM, HNBR ou EPDM, et/ou que le matériau de butée (40) présente une dureté Shore A dans la plage de 0,85-0,95, de préférence d'environ 0,9.

EP 3 924 640 B1

Fig. 1

Fig. 2

Fig. 3

Fig. 4

**EP 3 924 640 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2282078 A2